# DEMANDE DE BREVET EUROPEEN

(11) **EP 4 484 722 A1**
(43) Date de publication de la demande: **01.01.2025**
(21) Numéro de dépôt: 23182009.3
(22) Date de dépôt: 28.06.2023
(51) Int. Cl.: F02C 1/04, F02C 6/16, F02C 7/14

(54) **DISPOSITIF THERMIQUE D'ÉLÉVATION DE LA PRESSION D'UN GAZ, PROCÉDÉ D'ÉLÉVATION DE LA PRESSION D'UN GAZ ET INSTALLATION DE STOCKAGE D'ÉNERGIE METTANT EN OEUVRE UN TEL DISPOSITIF**

(71) Demandeur: Reinertz, Roger, 92120 Montrouge (FR)
(72) Inventeur: Reinertz, Roger, 92120 Montrouge (FR)
(74) Mandataire: Tranvouez, Edern Morgan

(57) **Abrégé**

L'invention concerne un dispositif thermique (400) d'élévation de la pression d'un gaz comprenant : un réservoir (410) de gaz destiné à être alimenté en gaz; un moteur à combustion interne (420) ; un générateur d'électricité (430) entraîné en rotation par le moteur à combustion ; au moins un système de chauffage (440) du gaz. L'au moins système de chauffage (440) comprend : au moins un premier système échangeur de chaleur (441, 442) du type liquide-air pour transférer de l'énergie thermique du moteur à combustion interne (410) vers le gaz, un deuxième système échangeur de chaleur (443) du type air-air pour transférer de l'énergie thermique d'un gaz de combustion du moteur à combustion interne (420) vers le gaz, et un système de chauffage électrique (445) alimenté par le générateur d'électricité (450).

## Description

### Domaine technique

L'invention concerne le domaine des systèmes de compression des gaz.

L'invention a plus précisément pour objet un dispositif thermique d'élévation de la pression d'un gaz, une installation de stockage mécanique d'énergie et de génération d'électricité comprenant un tel dispositif, un procédé d'élévation de la pression d'un gaz et un procédé de génération d'électricité sur demande.

### État de l'art antérieur

Pour certaines applications, telles que pour l'alimentation de certains systèmes pneumatiques ou certaines applications aéronautiques, il peut exister un besoin de fournir une élévation de pression d'un gaz sous pression.

Habituellement, une telle élévation de pression est obtenue à partir d'un compresseur. Néanmoins l'utilisation d'un compresseur nécessite un apport d'énergie électrique ou mécanique relativement important et nécessite, en raison d'un nombre important de pièces mouvantes sur lesquelles s'exercent des efforts relativement importants, une maintenance relativement lourde.

Il y aurait un intérêt à fournir un dispositif d'élévation de pression qui soit apte à fournir une élévation de pression, au moins ponctuelle, d'un gaz, ceci avec un nombre d'inconvénients réduits vis-à-vis des compresseurs utilisés dans le cadre de l'art antérieur.

### Exposé de l'invention

L'invention a ainsi pour but de fournir un système d'élévation de la pression d'un gaz qui soit à la fois efficient énergétiquement et présente des besoins de maintenance réduits vis-à-vis des solutions de l'art antérieur.

L'invention concerne à cet effet un dispositif thermique d'élévation de la pression d'un gaz comprenant :
- un réservoir de gaz destiné à être alimenté en gaz sous une première pression,
- un moteur à combustion interne comprenant au moins un circuit de fluide, tel qu'un circuit d'huile ou un circuit de liquide de refroidissement, et un échappement des gaz de combustion,
- un générateur d'électricité agencé entraîné en rotation par le moteur à combustion et configuré pour générer un courant électrique à partir du mouvement transmis,
- au moins un système de chauffage du gaz se trouvant au moins en partie agencé dans le réservoir pour augmenter la température du gaz sous pression afin d'élever la pression dudit gaz sous-pression de la première pression vers une deuxième pression supérieure à la première pression ,
- une sortie de gaz chauffé configurée pour délivrer le gaz chauffé à la deuxième pression,
dans lequel l'au moins système de chauffage comprend :
- au moins un premier système échangeur de chaleur du type liquide-air pour transférer de l'énergie thermique du moteur à combustion interne vers le gaz à partir de l'au moins un circuit de fluide du moteur à combustion interne,
- un deuxième système échangeur de chaleur du type air-air pour transférer de l'énergie thermique de gaz de combustion de l'échappement des gaz de combustion vers le gaz,
- un système de chauffage électrique alimenté par le courant électrique fourni par le générateur d'électricité et configuré pour chauffer le gaz.

Un tel système utilise une solution robuste, celle d'un moteur à combustion interne, qui est bien maîtrisée, pour permettre de chauffer un gaz et d'en élever la pression, conformément à la loi des gaz parfaits (ou ses pendants que sont les lois de Gay Lussac, Boyle-Mariotte et de Charles). Il en résulte un besoin de maintenance moindre. De plus, cette solution est efficiente, puisque le système de chauffage permet de récupérer une part majoritaire de l'énergie produite par le moteur pour permettre cette élévation de température et donc de pression. De ce fait, le présent dispositif thermique permet de fournir une élévation de pression du gaz relativement efficiente ceci en requérant une maintenance relativement faible vis-à-vis de l'art antérieur.

On notera également, qu'avec le choix d'un carburant adapté, tel qu'un carburant biosourcé, le dispositif thermique selon l'invention peut également être respectueux de la nature.

Ainsi, en particulier, le moteur à combustion interne peut être configuré pour être alimenté en un combustible biosourcé, ce combustible biosourcé étant préférentiellement sélectionné dans le groupe comprenant l'éthanol dont notamment les bioéthanols, les huiles végétales, les biogaz dont notamment les biométhanes, et les combinaisons de ceux-ci.

On notera que par combustible biosourcé, il est entendu les combustible et autres carburant ayant une origine organique, en excluant les combustibles et carburants fossiles. Ainsi, de tels combustibles biosourcé incluent l'éthanol d'origine agricole ou issus de déchets agricoles et/ou ménagées organiques, tel que le bioéthanols, les huiles végétales d'origine agricole ou issus de déchets agricoles et/ou ménagées organiques, le méthane d'origine agricole ou issus de déchets agricoles et/ou ménagées organiques.

En alternative ou en complément à de tels combustibles biosourcés, le moteur à combustion interne peut être alimenter en carburant de synthèse, ou électro-carburant, tel qu'un e-kérosène.

De tels carburants de synthèse sont produit à partir d'électricité, de dioxyde de carbone ou d'azote dans le cas de l'e-ammoniac, et d'hydrogène issu d'électrolyse. Ces combustibles fournissent, lorsque l'électricité utilisée pour les générer est renouvelable ou bas-carbone, une alternative bas-carbone aux combustibles biosourcés. Ces carburants de synthèse sont donc parfaitement compatibles avec les visés écologiques de la présente invention.

L'au moins un circuit de fluide peut comprendre un circuit de liquide de refroidissement du moteur à combustion interne, le premier système échangeur de chaleur comprend au moins un premier échangeur de chaleur liquide-air pour échanger des calories du liquide de refroidissement vers le gaz sous-pression.

Un tel échange thermique entre le liquide de refroidissement du moteur à combustion interne et le gaz sous-pression permet d'obtenir une élévation de température de ce dernier gaz, et donc de sa pression, à partir de calorie générer par le moteur tout en offrant un refroidissement pour le moteur à combustion interne favorisant ainsi un fonctionnement optimisé de ce dernier.

L'au moins un circuit de fluide peut comprendre un circuit de lubrification du moteur à combustion interne distribuant un liquide de lubrification dans le moteur à combustion interne, le premier système échangeur de chaleur comprend au moins un deuxième échangeur de chaleur liquide-air pour échanger des calories du liquide de lubrification vers le gaz sous-pression.

Un tel échange entre le liquide de lubrification et le gaz sous-pression permet d'à la fois garder une température de fonctionnement optimale pour le liquide de lubrification tout en permettant de transférer des calories du liquide de lubrification vers le gaz sous-pression afin d'en élever la température et donc la pression.

Le dispositif thermique peut comprendre en outre une première valve antiretour et dans lequel le réservoir est destiné à être alimenté en gaz sous-pression au travers de la première valve antiretour.

De cette manière, on évite que le gaz sous-pression ne reprenne le chemin inverse, ce qui abaisserai de fait le gain en pression.

Le dispositif peut comprendre en outre une deuxième valve antiretour, dans lequel le réservoir comprend :
- un premier sous-réservoir par lequel il est destiné à être alimenter en gaz sous pression, et
- un deuxième sous-réservoir agencé pour être alimenter en gaz par le premier sous-réservoir au travers de la deuxième valve antiretour et pour délivrer le gaz sous pression à la deuxième pression à la sortie de gaz,
l'au moins un système de chauffage du gaz étant en outre configuré :
- pour augmenter la température du gaz sous pression dans le premier sous-réservoir de la première pression vers une pression intermédiaire comprise entre la première pression et la deuxième pression,
- pour augmenter la température du gaz sous pression dans le deuxième sous-réservoir de la pression intermédiaire vers la deuxième pression.

L'utilisation d'un tel premier et deuxième sous-réservoir permet une élévation de la température et donc de la pression du gaz sous-pression par palier, le gaz sous pression pouvant être chauffé à une première température, c'est-à-dire une pression dans le premier sous-réservoir et être chauffé à une deuxième température, c'est-à-dire une deuxième pression, supérieures à respectivement la première température et la première pression, dans le deuxième sous-réservoir. Avec un tel agencement, le dispositif peut permettre au gaz sous pression d'atteindre une température et une pression supérieur à ce qu'il pourrait permettre d'atteindre avec un réservoir unitaire.

L'au moins un premier système échangeur de chaleur est agencé au moins en partie dans le premier sous-réservoir pour augmenter la température du gaz sous pression dans le premier sous-réservoir de la première pression vers une pression intermédiaire le deuxième système échangeur de chaleur et le système de chauffage électrique étant agencés dans le deuxième sous-réservoir pour augmenter la température du gaz sous pression dans le deuxième sous-réservoir de la pression intermédiaire vers la deuxième pression.

De cette manière, les différents éléments du dispositif permettent un chauffage par palier du gaz sous-pression permettant une élévation relativement importante de la température et donc de la pression du gaz sous pression.

L'invention concerne en outre une installation de de stockage mécanique d'énergie et de génération d'électricité comprenant :
- au moins un volant d'inertie apte à être entraîné en rotation par une source d'énergie extérieure à l'installation,
- au moins une colonne de liquide,
- au moins un ensemble comprenant un lest et un contenant à gaz, tel qu'un sac à gaz, ci-après ensemble lest/sac, disposé dans la colonne de liquide et agencé de telle manière à ce que la chute du lest dans la colonne de liquide entraine en rotation le volant d'inertie, le sac à gaz étant configuré pour relâcher un gaz qui y est stocké lorsque l'ensemble lest/sac une portion supérieure de la colonne de liquide,

- au moins un système d'insufflation de gaz au moins partiellement agencé dans la colonne de liquide et qui est configuré pour insuffler du gaz dans le contenant à gaz lorsque l'ensemble lest/sac atteint une portion inférieure de la colonne de liquide,
- un deuxième générateur d'électricité susceptible d'être entraîné en rotation par le volant d'inertie pour générer de l'électricité,
dans lequel le système d'insufflation comprend :
- une source de gaz pressurisé, tel qu'un turbo à gaz configuré pour fournir un flux de gaz,
- un dispositif thermique d'élévation de la pression d'un gaz configuré pour élever la température du flux de gaz fourni par la source de gaz pressurisé, le dispositif étant un dispositif selon l'invention,
- au moins un mécanisme d'insufflation de gaz configuré pour insuffler le flux de gaz chauffé dans le contenant à gaz lorsque l'ensemble lest/sac atteint une portion inférieure de la colonne de liquide.

Une telle installation permet un stockage d'énergie fourni par la source extérieure ceci avec une rétention d'énergie relativement importante en raison de l'entretien du mouvement permis par la chute du l'ensemble lest/sac et l'apport d'énergie complémentaire fourni par l'élévation de pression permise par le dispositif thermique selon l'invention.

On notera que selon une possibilité de l'invention, la source de gaz pressurisé peut être mise en mouvement par le moteur à combustion interne soit directement soit indirectement au travers de l'électricité générée par le générateur.

L'invention concerne en outre un procédé d'élévation de la pression d'un gaz au moyen d'un moteur à combustion interne, le procédé d'élévation de la pression d'un gaz comprenant les étapes suivantes :
- récupération d'un gaz à une première pression dans un réservoir,
- élévation de la température du gaz pour l'amener de la première pression à une deuxième pression par récupération de la chaleur générée par le fonctionnement du moteur à combustion interne au moyen de :
   ∘ un premier système échangeur de chaleur du type liquide-air pour transférer de l'énergie thermique du moteur à combustion interne vers le gaz à partir d'au moins un circuit de fluide du moteur à combustion interne,
   ∘ un deuxième système échangeur de chaleur du type air-air pour transférer de l'énergie thermique de gaz de combustion du moteur à combustion interne vers le gaz,
   ∘ un système de chauffage électrique alimenté par un courant électrique fourni par un générateur d'électricité entraîné en rotation par le du moteur à combustion interne,
- délivrance du gaz à la deuxième pression.

Un tel procédé permet d'obtenir une élévation de pression d'un gaz sous-pression ceci de manière robuste puisqu'obtenu à partir d'un moteur à combustion interne, qui est bien maîtrisée, pour permettre de chauffer un gaz et d'en élever la pression, conformément à la loi des gaz parfaits (ou ses pendants que sont les lois de Gay Lussac, Boyle-Mariotte et de Charles). Ce procédé est de plus particulièrement efficient, , puisque le système de chauffage permet de récupérer une part majoritaire de l'énergie produite par le moteur pour permettre cette élévation de température et donc de pression

Le moteur à combustion interne peut être alimenté par un combustible biosourcé, puisque le système de chauffage permet de récupérer une part majoritaire de l'énergie produite par le moteur pour permettre cette élévation de température et donc de pression.

Avec un tel combustible, le procédé selon l'invention est particulièrement respectueux de la nature.

L'invention concerne en outre un procédé de génération d'électricité sur demande à partir d'au moins une source d'énergie intermittente mettant en oeuvre une Installation de stockage mécanique d'énergie et de génération d'électricité selon l'invention, le procédé comprenant les étapes suivantes :
- utilisation de la source d'énergie intermittente en tant que source d'énergie extérieure pour entraîner au moins en partie en rotation le volant à inertie, le volant à inertie étant également entraînée par la chute de l'ensemble comprenant un lest et un contenant à gaz, tel qu'un sac à gaz, ledit gaz étant alimenté en gaz à la deuxième pression par le dispositif thermique,
- génération d'électricité à partir du deuxième générateur d'électricité entraîné en rotation par le volant à inertie.

Un tel procédé permet une fourniture d'énergie à la demande à partir d'une source d'énergie intermittente tout en bénéficiant des avantages liés à l'élévation de la pression de gaz permis par l'invention.

### Brève description des dessins

La présente invention sera mieux comprise à la lecture de la description d'exemples de réalisation, donnés à titre purement indicatif et nullement limitatif, en faisant référence aux dessins annexés sur lesquels :
- La figure 1 illustre un dispositif thermique d'élévation de la pression d'un gaz selon l'invention,
- la figure 2 illustre une installation de stockage mécanique d'énergie et de génération d'électricité comprenant un dispositif thermique selon l'invention,
- la figure 3 illustre schématiquement un exemple d'emplacement à section réduite susceptible d'être utilisé dans le cadre d'une possibilité avantageuse de l'invention,
- la figure 4 illustre schématiquement un ensemble lest/sac susceptible d'être mis en oeuvre dans le cadre de la présente invention.

Des parties identiques, similaires ou équivalentes des différentes figures portent les mêmes références numériques de façon à faciliter le passage d'une figure à l'autre.

Les différentes parties représentées sur les figures ne le sont pas nécessairement selon une échelle uniforme, pour rendre les figures plus lisibles.

Les différentes possibilités (variantes et modes de réalisation) doivent être comprises comme n'étant pas exclusives les unes des autres et peuvent se combiner entre elles.

### Exposé détaillé de modes de réalisation particuliers

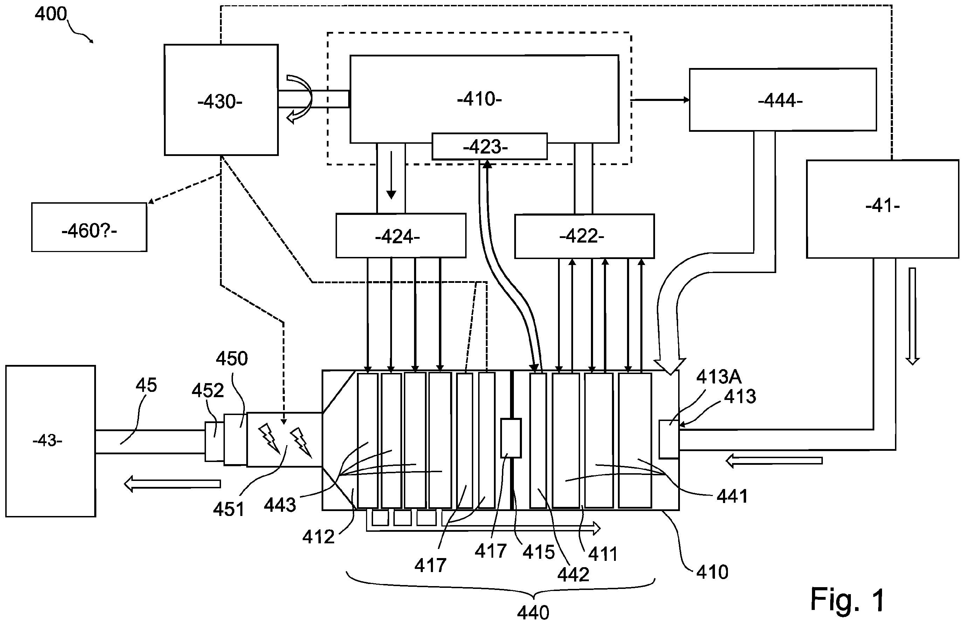

Comme montré sur la figure 1, la présente invention concerne un dispositif thermique 400 d'élévation de la pression d'un gaz qui est adapté pour augmenter la pression dudit gaz en lui appliquant de la chaleur.

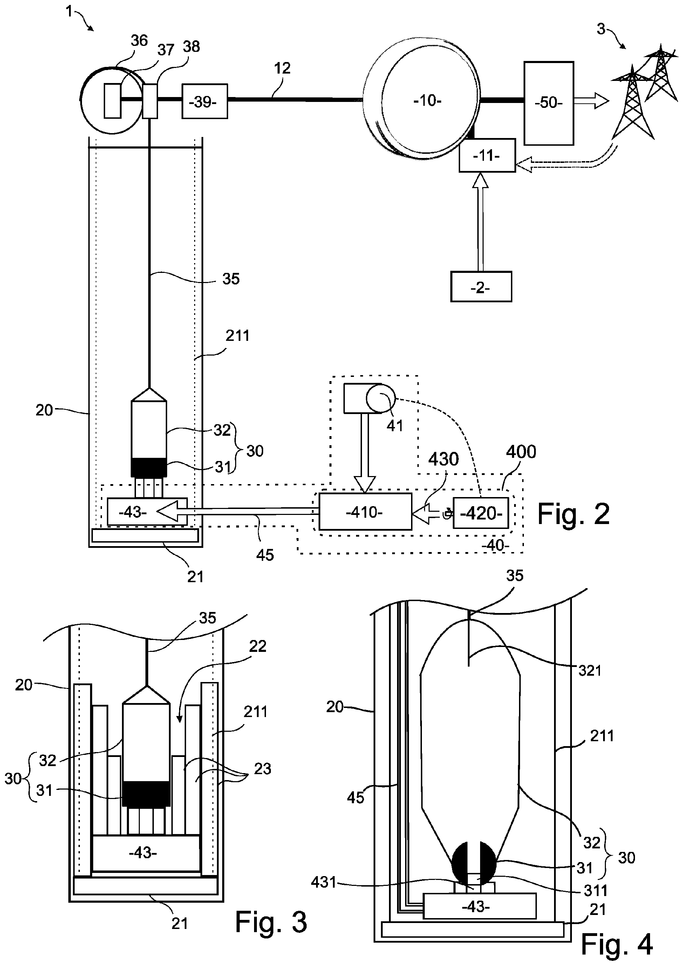

Comme cela est expliqué dans la deuxième partie de ce document en relation avec les figures 2 à 4, un tel dispositif thermique 400 peut être utilisé dans le cadre d'une Installation de stockage mécanique d'énergie et de génération d'électricité 1. Néanmoins, si cette application du dispositif thermique 400 selon l'invention est particulièrement avantageuse, il ne se limite pas à cette seule application. En effet, le dispositif thermique selon l'invention peut être mis en oeuvre pour l'alimentation de certains systèmes pneumatiques ou certaines applications aéronautiques lorsqu'une élévation temporaire de pression ponctuelle permise par l'application de chaleur est adaptée.

Pour permettre une telle alimentation en gaz, le dispositif thermique 40 peut être alimenté en gaz à une première pression par une source de gaz. Comme cela est décrit dans la deuxième partie de ce document, dans le cadre de la présente application de l'invention, la source de gaz est un turbo à gaz 41 entraîné par un moteur électrique, non référencé. Bien entendu d'autre source de gaz sont envisageables, comme un premier étage de compresseur, une bouteille de gaz sous pression ou un ventilateur, sans que l'on sorte du cadre de l'invention.

Conformément à l'entendement de l'homme du métier, un turbo à gaz comprend généralement un compresseur centrifuge qui permet, dans le cadre de la présente invention, par sa rotation, de fournir un flux gaz qui peut est utilisé dans le cadre de la présente application à l'alimentation en gaz du dispositif thermique 400.

Comme montré sur la figure 1, le dispositif thermique 400 selon l'invention comporte :
- un réservoir 410 de gaz destiné à être alimenté en gaz sous une première pression,
- un moteur à combustion interne 420 comprenant au moins un circuit de fluide, tel qu'un circuit d'huile ou un circuit de liquide de refroidissement, et un échappement des gaz de combustion,
- un générateur d'électricité 430 agencé entraîné en rotation par le moteur à combustion et configuré pour générer un courant électrique à partir du mouvement transmis,
- au moins un système de chauffage 440 du gaz se trouvant au moins en partie agencé dans le réservoir pour augmenter la température du gaz sous pression afin d'élever la pression dudit gaz sous-pression de la première pression vers une deuxième pression supérieure à la première pression ,
- une sortie de gaz 450 chauffé configurée pour délivrer le gaz chauffé à la deuxième pression.

Dans le cadre du présent mode de réalisation, le moteur à combustion 420 comprend :
- un circuit de liquide de refroidissement 422 agencé pour prélever de la chaleur du moteur à combustion interne 420 afin d'en limiter la température de fonctionnement,
- un circuit de lubrification 423 distribuant un liquide de lubrification dans le moteur à combustion interne 420, tel qu'une huile, dans le moteur à combustion interne 410,
- un échappement des gaz de combustion 424 par laquelle sont récupérés les gaz issus de la combustion d'un combustible dans le moteur à combustion interne 420.

Le système de chauffage 440 comprend :
- un premier échangeur de chaleur liquide-air 441 pour transférer de l'énergie thermique du moteur à combustion interne 420 vers le gaz à partir du circuit de liquide de refroidissement 422,
- un deuxième échangeur de chaleur liquide-air 442 du type pour transférer de l'énergie thermique du moteur à combustion interne 420 vers le gaz à partir du circuit de circuit de lubrification 423,
- un troisième échangeur de chaleur air-air 443 pour transférer de l'énergie thermique des gaz de combustion du moteur à combustion interne (420) vers le gaz, ces gaz de combustion ayant été récupérés à partir de l'échappement des gaz de combustion 424,
- un système de chauffage électrique 445 alimenté par le courant électrique fourni par le générateur d'électricité 450 et configuré pour chauffer le gaz.

En outre, le système de chauffage 440 peut comprendre également un système de récupération d'énergie thermique de l'environnement du moteur à combustion interne 420. Pour ce faire, le local dans lequel se trouve le moteur à combustion interne 410 peut être équipé d'un système de récupération de calorie 444, tel qu'un quatrième échangeur de chaleur air-air. Le système de récupération de calorie 444 peut ainsi permettre de récupérer la chaleur émise par le moteur à combustion interne dans son environnement afin de chauffer le gaz.

Le premier et le deuxième échangeur de chaleur liquide-air échangeur de chaleur 441, 442 forment ensemble un premier système échangeur de chaleur 441, 442 du type liquide-air qui est adapté pour transférer de l'énergie thermique du moteur à combustion interne 410 vers le gaz à partir d'au moins un circuit de fluide 422, 423 du moteur à combustion interne 420. Le troisième échangeur de chaleur air-air 443 forme un deuxième système échangeur de chaleur 443 du type air-air.

Le réservoir 410 est un réservoir configuré pour recevoir de l'air sous pression et présente donc une conformation adaptée. En outre, dans le but d'optimiser le rendement du présent dispositif thermique 400 selon l'invention, le réservoir 410 présente préférentiellement une isolation thermique, telle qu'une double paroi du réservoir dont l'espace inter-paroi contient un gaz isolant ou est mise sous un vide au moins primaire, ou encore l'utilisation d'un matériau isolant, tel qu'un polystyrène, de la laine de verre/roche, ou des fibres/matériaux naturels isolants (liège, de la ouate de cellulose...). Le réservoir410 comporte une arrivée 413 du gaz, pour permettre son alimentation en gaz sous pression, et la sortie de gaz 450 pour permettre la délivrance du gaz chauffé à la deuxième pression. Dans une configuration usuelle de l'invention, l'arrivée 413 du gaz peut comprendre une première valve antiretour 413A de telle manière à ce que lors de l'élévation en température du gaz, une partie du gaz ne s'échappe pas vers une conduite d'amenée de gaz par laquelle le gaz est amené au réservoir 410.

Dans une configuration avantageuse de l'invention, le réservoir 410 comprend :
- un premier sous-réservoir 411 par lequel il est destiné à être alimenter en gaz sous pression, et
- un deuxième sous-réservoir 412 agencé pour être alimenter en gaz par le premier sous-réservoir 411 et pour délivrer le gaz sous pression à la deuxième pression à la sortie de gaz 250.
Si dans le présent mode de réalisation, les premier et deuxième sous-réservoir 411, 412 sont fournis par l'agencement d'une paroi de séparation dans le réservoir 410, il est également envisageable, sans que l'on sorte du cadre de l'invention, que le premier et le deuxième sous-réservoir 411, 412 soient des réservoirs indépendants et reliés l'un à l'autre par une conduite dédiée.

Comme montré sur la figure 1, la paroi de séparation 415 est équipée d'une deuxième valve antiretour 417 par laquelle le premier réservoir 411 alimente en gaz le deuxième réservoir. Cette deuxième valve antiretour 417 peut être configurée pour présenter un seuil de pression de délivrance à partir duquel le deuxième réservoir 412 est alimenté en gaz par le premier réservoir 411. Ce seuil de pression de la deuxième valve antiretour 417 peut être une pression intermédiaire entre la première pression et la deuxième pression. Sur la base de cette possibilité, le système de chauffage 440 peut être configuré pour :
- pour augmenter la température du gaz sous pression dans le premier sous-réservoir 411 de la première pression vers une pression intermédiaire comprise entre la première pression et la deuxième pression,
- pour augmenter la température du gaz sous pression dans le deuxième sous-réservoir 412 de la pression intermédiaire vers la deuxième pression.

Ainsi, dans le cadre du présent mode de réalisation :
- le premier et deuxième échangeur de chaleur liquide-gaz 422, 423 et le système de récupération de calorie 444 sont agencés pour chauffer le gaz de la première pression à la pression intermédiaire dans le premier sous-réservoir 411, et
- le troisième échangeur de chaleur air-air 424 et le système de chauffage électrique 445 sont agencés pour chauffer le gaz de la pression intermédiaire à la deuxième pression intermédiaire dans le deuxième sous-réservoir 412.

On notera que, bien entendu, en fonction de ses besoins et selon sa pratique usuelle, l'homme du métier est à même de dimensionner les premier, deuxième et troisième échangeurs de chaleur 422, 423, 424 en fonction des besoins d'échauffement du gaz pour atteindre la deuxième pression.

Dans le cadre de l'application décrite ci-après en lien avec les figures 2 à 4, la sortie de gaz 450 peut être équipée d'un ventilateur 451 afin de permettre une délivrance du gaz à la deuxième pression par une conduite 45 lorsque cette délivrance est nécessaire. De la même manière, ou en variante, comme cela est montré sur la figure 1 la sortie de gaz 450 peut comporter une troisième valve antiretour. Cette troisième valve antiretour 452 peut être configurée pour présenter un seuil de pression de délivrance à partir duquel le gaz est délivré à la conduite 45. Ce seuil de pression de la deuxième valve antiretour 417 peut être la deuxième pression.

Afin de conserver l'élévation de température (et donc de pression) du gaz dans le cadre de cette délivrance, la conduite 45 peut présenter une isolation thermique. Cette isolation est préférentiellement obtenue par un tube 45 à double paroi avec l'espace défini entre les deux parois qui est préférentiellement sous un vide industriel, voire primaire.

Dans le cadre du présent mode de réalisation, le moteur à combustion interne 420 peut être configuré pour être alimenté en un combustible biosourcé, ce combustible biosourcé étant préférentiellement sélectionné dans le groupe comprenant l'éthanol dont notamment les bioéthanols, les huiles végétales, les biogaz dont notamment les biométhanes, et les combinaisons de ceux-ci.

En alternative ou en complément à de tels combustibles biosourcés, le moteur à combustion interne 420 peut être alimenter en carburant de synthèse, ou électro-carburant, tel qu'un e-kérosène.

Un tel dispositif thermique 400 peut être mise en oeuvre dans le cadre d'un procédé d'élévation de la pression d'un gaz comprenant les étapes suivantes :
- récupération d'un gaz à une première pression dans un réservoir 410,
- élévation de la température du gaz pour l'amener de la première pression à une deuxième pression par récupération de la chaleur générée par le fonctionnement du moteur à combustion interne 410 au moyen de :
   ∘ du premier système échangeur de chaleur 441, 442 du type liquide-air pour transférer de l'énergie thermique du moteur à combustion interne 410 vers le gaz à partir d'au moins un circuit de fluide 422, 423 du moteur à combustion interne 420,
   ∘ du deuxième système échangeur de chaleur 443 du type air-air pour transférer de l'énergie thermique de gaz de combustion du moteur à combustion interne 420 vers le gaz, et
   ∘ du système de chauffage électrique 445 alimenté par un courant électrique fourni par le générateur d'électricité 450 entraîné en rotation par le du moteur à combustion interne 420,
- délivrance du gaz à la deuxième pression.

Lors de la mise en oeuvre de ce procédé, afin de réduire l'empreinte carbone lié à la mise en oeuvre du présent procédé, le moteur à combustion interne peut être alimenté en un combustible biosourcé, ce combustible biosourcé étant préférentiellement sélectionné dans le groupe comprenant l'éthanol dont notamment les bioéthanols, les huiles végétales, les biogaz dont notamment les biométhanes, et les combinaisons de ceux-ci.

La figure 2 illustre une installation de stockage mécanique d'énergie et de génération d'électricité 1 selon l'invention adaptée pour stocker de l'énergie sous forme mécanique, cette énergie pouvant être issue d'une source d'énergie intermittente, et pour générer de l'électricité à la demande.

Comme montrée sur cette figure, une telle installation de stockage mécanique d'énergie et de génération d'électricité 1 comprend :
- au moins un volant d'inertie 10 apte à être entraîné en rotation par une source d'énergie extérieure 2 à l'installation,
- une colonne de liquide 20, ladite colonne de liquide 20 étant, dans le présent mode de réalisation une colonne d'eau,
- un ensemble 30 comprenant un lest 31 et un sac à gaz 32, ci-après ensemble lest/sac 30, disposé dans la colonne de liquide 20 et agencé de telle manière à ce que la chute du lest 31 dans la colonne de liquide entraine en rotation le volant d'inertie 10, le sac à gaz 32 étant configuré pour relâcher un gaz qui y est stocké lorsque l'ensemble lest/sac 30 atteint une portion supérieure de la colonne de liquide 20,
- au moins un système d'insufflation de gaz 40 au moins partiellement agencé dans la colonne de liquide 20 et qui est configuré pour insuffler du gaz dans le sac à gaz 32 lorsque l'ensemble lest/sac 30 atteint une portion inférieure de la colonne de liquide 20,
- un deuxième générateur d'électricité 50 susceptible d'être entraîné en rotation par le volant d'inertie 10 pour générer de l'électricité.

le système d'insufflation 40 comprend :
- un turbo à gaz 41 entraîné en rotation par un moteur électrique, non montré, le turbo à gaz 41 étant configuré pour fournir un flux de gaz à la première pression, ledit moteur électrique étant alimenté par le générateur d'électricité 450 du dispositif thermique 400,
- le dispositif thermique 400 selon l'invention pour fournir une élévation de la pression du flux de gaz à la deuxième pression
- un mécanisme d'insufflation de gaz 43 configuré pour insuffler le gaz chauffé délivré par le dispositif thermique 400, en tant que flux de gaz, dans le sac à gaz 32 lorsque l'ensemble lest/sac 30 atteint une portion inférieure de la colonne de liquide 20.

Selon une caractéristique avantageuse de la présente application de l'invention, non montrée, le volant d'inertie 10 peut être agencé sous vide afin de limiter les pertes liées aux frottements et aux turbulences que peut générer le déplacement du volant d'inertie 10. Le volant d'inertie 10 peut ainsi être agencé sous un vide au moins industriel, c'est-à-dire compris entre la pression atmosphérique, c'est-à-dire environ 100.000 Pa, et 100 Pa ou, de manière préférentielle, un vide au moins primaire, c'est-à-dire compris entre 100 Pa et 0,1 Pa.

Afin de permettre son entraînement, le volant d'inertie 10 peut être entraîné, par exemple au moyen d'une roue libre, par un moteur 11 alimenté électriquement par une source d'énergie extérieure 2. Conformément à l'invention, cette source d'énergie extérieure 2 est préférentiellement une source d'énergie renouvelable, par essence intermittente. Cette source d'énergie extérieure 2 peut ainsi, par exemple, et de manière non limitative, être des panneaux photovoltaïques, des éoliennes, des hydroliennes ou encore des installations marémotrices. On notera que, selon une possibilité de l'application de l'invention illustrée sur la figure 1, afin d'initialiser l'installation, c'est-à-dire commencer à mettre en mouvement le volant d'inertie 10, ou de permettre un stockage de surproduction d'électricité du réseau, le moteur 11 peut également être relié à un réseau de distribution d'électricité 3.

Le volant d'inertie 10 est également entraîné en rotation par la chute de l'ensemble lest/sac 30 le long de la colonne de liquide 20. Pour se faire, le volant d'inertie 10 peut être mécaniquement connecté à un axe d'entraînement 12 lui-même relié mécaniquement à un système de roue libre 37 et de poulie 36 autour de laquelle s'enroule un câble 35 relié à l'ensemble lest/sac 30. La roue libre 37 est conformée de telle manière à ce que l'axe d'entraînement 12 soit entraîné en rotation lorsque le câble 35 se déroule sous l'effet de la chute de l'ensemble lest/sac 30 et pour que la poulie 36 soit libre en rotation vis-à-vis de l'axe d'entraînement 12 lorsque le câble est réenroulé autour de la poulie 36. Afin de permettre un arrêt d'urgence de l'installation, par exemple pour permettre une opération de maintenance par un technicien, l'axe d'entraînement, ou un autre élément solidaire en rotation du volant d'inertie, est préférentiellement muni d'un système de freinage d'urgence 39, tel que des freins à disques.

L'ensemble lest/sac 30 est agencé dans la colonne de liquide 20 en se déplaçant entre la portion inférieure de la colonne de liquide 20 dans laquelle le sac à gaz 32 est gonflé par insufflation de gaz fourni par le système d'insufflation de gaz et la portion supérieure dans laquelle le sac à gaz 32 relâche le gaz qu'il stocke. Le déplacement de l'ensemble lest/sac 30 de la portion supérieure vers la portion inférieure de la colonne de liquide 20 est obtenu par la force exercée par la gravité sur le lest 31 ceci avec une traînée réduite du fait que le sac à gaz 32 se retrouve dégonflé après avoir relâché le gaz. Ce déplacement ou chute de l'ensemble lest/sac entraîne avec lui le câble 35 et met en rotation la poulie, l'axe d'entraînement afin de transmettre l'énergie libérée pendant la chute au volant d'inertie 10.

En ce qui concerne le déplacement de l'ensemble lest/sac 30 de la portion inférieure vers la portion supérieure de la colonne de liquide 20 est obtenu sous l'effet de la poussée d'Archimède s'exerçant sur le sac à gaz une fois qu'il est gonflé par l'intermédiaire du système d'insufflation 40. Afin d'accompagner cette remontée de l'ensemble lest/sac 30, l'installation comprend un système pour rembobiner 38 le câble 35 sur la poulie 36 afin de rembobiner le câble 35 pendant la remontée de l'ensemble lest/sac 30. Dans le cadre de ce premier mode de réalisation, le système pour rembobiner 38 comprend à la fois un ressort à spiral qui, mis sous tension dans le cadre de la chute de l'ensemble lest/sac 30, permet un mécanisme d'entraînement de la poulie par le volant d'inertie qui est engagé uniquement pendant la remontée de l'ensemble lest/sac 30. Un tel ressort à spiral forme un élément de rappel élastique agencé de telle manière à être sollicité pendant la chute de l'ensemble lest/sac 30 à partir d'une profondeur dans la colonne de liquide 20 prédéterminée. On notera qu'un tel agencement peut être fourni par un système d'accouplement, non montré, apte à accoupler le ressort à spiral avec la poulie 36B avec le ressort lorsque l'ensemble lest/sac 30 atteint une profondeur donnée. Pour se faire, l'installation peut, selon une possibilité non illustrée, comprendre un capteur apte à détecter lorsque l'ensemble lest/sac 30 atteint une profondeur donnée dans la colonne de liquide et une unité de commande, relié audit capteur et qui est configuré pour commander le système d'accouplement afin d'accoupler le ressort à spiral avec la poulie 36B.

Bien entendu, l'installation selon cette application de l'invention peut mettre en oeuvre des systèmes pour rembobiner 38 autres, tels qu'un moteur électrique, sans que l'on sorte du cadre de l'invention.

Outre le ressort à spiral du système pour rembobiner 38 et comme montré sur la figure 3, l'installation selon l'invention peut comprendre un dispositif de freinage de la chute de l'ensemble lest/sac 30 agencé dans la portion inférieure de la colonne de liquide. Dans le cadre de ce premier mode de réalisation, le dispositif de freinage de la chute de l'ensemble lest/sac peut comprendre un emplacement à section réduite 22 agencé dans la portion inférieure de la colonne de liquide. Cet emplacement de section réduite 22 est conformé pour recevoir l'ensemble lest/sac 30 et présente une section se réduisant graduellement de telle manière que lors de la chute de l'ensemble lest/sac 30, la pression exercée par l'eau sous la poussée de l'ensemble lest/sac 30 permet de ralentir la chute de ce dernier. Pour se faire, dans l'exemple schématisé sur la figure 3, il est prévu un ensemble de trois contenants 23 concentriques dont la section et la hauteur se réduisant en allant de l'extérieur vers l'intérieur. Le contenant 23 le plus central présente une ouverture légèrement supérieure à la projection verticale du lest 31 de manière que lors de l'arrivée du lest 31 dans ledit contenant 23, le liquide chassé par la chute du lest est un passage de taille réduite laissé par le lest 31 afin d'offrir une résistance maximale à la chute du lest.

Par ouverture légèrement supérieure à la projection verticale du lest 31 il est entendu ci-dessus et dans le reste de ce document que lors de son passage, sur toute la périphérie du lest 31, l'ouverture présente une distance minimale inférieure à 20 cm, préférentiellement à 10 cm voire à 5 cm.

Bien entendu, si dans le présent mode de réalisation, la section variable de l'emplacement 22 est fournie par l'intermédiaire de contenants 23 à section décroissante, il est parfaitement envisageable, en variante et sans que l'on sorte du cadre de l'invention, que ce soit la colonne de liquide 20 elle-même qui présente une section variable.

De même, en variante ou en complément à un tel emplacement à section variable, le dispositif de freinage de la chute de l'ensemble lest/sac 30 agencé peut comprendre un élément en matériau déformable pour absorber, par sa déformation, au moins une partie de l'énergie cinétique emmagasinée par l'ensemble lest/sac 30 tout au long de sa chute.

Comme précisé plus haut, le système d'insufflation 40 est adapté pour permettre de gonfler le sac à gaz en lui insufflant du gaz. Le système d'insufflation 40 comprend le turbo à gaz 41 qui est entraîné en rotation par le moteur électrique afin de générer un flux de gaz, ici un flux d'air. Ce flux d'air, comme montré sur la figure 2, permet d'alimenter le réservoir 410 du dispositif thermique 400. Conformément à l'invention, le dispositif thermique permet de chauffer le flux d'air et d'en élever la pression, conformément à la loi des gaz parfaits (ou ses pendants que sont les lois de Gay Lussac, Boyle-Mariotte et de Charles). L'air ainsi élevé en température, et donc en pression, est délivré à un mécanisme d'insufflation d'air 43 tel que montré sur la figure 3. Pour permette une telle délivrance de gaz au mécanisme d'insufflation d'air 43 sans baisse significative de la température de l'air, cette délivrance peut se faire au moyen d'un tube 45 isolé. Cette isolation est préférentiellement obtenue par un tube 45 à double paroi avec l'espace défini entre les deux parois qui est préférentiellement sous un vide industriel, voire primaire.

Pour permettre l'insufflation d'air, le lest 31 peut par exemple présenter un orifice traversant débouchant dans le sac à gaz 32 et muni d'une valve 311 destinée à coopérer avec une valve complémentaire 431 du mécanisme d'insufflation 43 de telle manière que la valve 311 et la valve complémentaire 431 s'ouvrent pour libérer le gaz délivré à partir du réservoir 44 lorsqu'elles rentrent en contact l'une de l'autre après la chute de l'ensemble lest/sac 30. Bien entendu, dès qu'une quantité de gaz suffisante est introduite dans le sac à gaz 32 pour que la poussée d'Archimède s'exerçant sur le sac à gaz compense la force de gravité s'exerçant sur le lest 31 et que l'ensemble lest/sac 30 se déplace en direction de la portion supérieure de la colonne de liquide 20, la valve 311 et la valve complémentaire 431 se séparent et se referment.

La figure 4 montre également l'ouverture 321 prévue au niveau de la partie haute du sac à gaz 32 afin que le gaz/l'air stocké dans le sac à gaz 32 soit libéré lorsque le sac à gaz 32 atteint la portion haute de la colonne de liquide 20, cette portion supérieure étant préférentiellement une portion dans laquelle l'ouverture 321 du sac est émergée de manière à éviter toute rentrée de liquide dans le sac à gaz. Afin de permettre une telle ouverture, la portion supérieure de la colonne de liquide 20 est préférentiellement munie d'un organe, non montré, destiné à coopérer avec l'ouverture 321 afin de permettre une ouverture du sac à gaz 32. Cet organe est également adapté pour permettre une fermeture de ladite ouverture 321 lorsque le sac à gaz 32 a libéré le gaz qui y était stocké.

On notera que pour permettre l'inspection et/ou l'entretien du mécanisme d'insufflation, l'installation 1 peut comprendre une plateforme 21 sur laquelle est disposé le mécanisme d'insufflation 43, et éventuellement les contenants 23. L'installation 1 comprend en outre des câbles de relevage 211 pour permettre de relever la plateforme et le mécanisme d'insufflation 43 qu'elle supporte.

Afin de permettre une récupération de l'énergie cinétique stockée dans le volant d'inertie 10, l'installation 1 comprend le deuxième générateur d'électricité 50 susceptible d'être entraîné en rotation par le volant d'inertie 10. L'installation 1 peut ainsi comprendre un système d'accouplement/désaccouplement d'un rotor du deuxième générateur électrique 50 avec le volant d'inertie 10 de manière à permettre une génération d'électricité sur demande. Le deuxième générateur d'électricité 50 comprend une sortie afin de délivrer l'électricité au réseau de distribution d'électricité.

Si dans le présent mode de réalisation de l'installation de stockage mécanique d'énergie et de génération d'électricité 1, l'ensemble lest/sac 30 comprend un sac à gaz, il est bien entendu envisageable qu'un tel ensemble comprend un autre type de contenant à gaz, tel qu'un flotteur rigide apte à être rempli d'air ou d'eau, ceci sans que l'on sorte du cadre de l'invention.

Une telle installation de stockage mécanique d'énergie et de génération d'électricité 1 est adaptée pour permettre la mise en oeuvre d'un procédé de génération d'électricité sur demande à partir d'au moins une source d'énergie intermittente, le procédé comprenant
- utilisation de la source d'énergie intermittente 2 en tant que source d'énergie extérieure pour entraîner au moins en partie en rotation le volant à inertie 10, le volant à inertie étant également entraînée par la chute de l'ensemble 30 comprenant le lest 31 et le sac à gaz 32, ledit sac à gaz 32 étant alimenté en gaz à la deuxième pression par le dispositif thermique 400,
- génération d'électricité à partir du deuxième générateur d'électricité 50 entraîné en rotation par le volant à inertie 10.

L'électricité générée dans le cadre d'un tel procédé peut être injectée dans un réseau de distribution d'électricité, tel qu'un réseau général de distribution d'électricité ou celui d'un village isolé, d'une usine ou encore un équipement public tel qu'un hôpital. On notera également, lorsqu'une partie de l'électricité générée par le générateur d'électricité 430 n'est pas utilisée pour l'élévation en pression du gaz ou la rotation du turbo, cette partie d'électricité peut être soit utilisée soit pour être réinjectée et complémenter la production vers le réseau.

Bien entendu, dans le cadre d'un tel procédé, il peut être prévu une étape d'initialisation à partir d'électricité prélevée sur le réseau de distribution d'électricité ou du générateur d'électricité 430.

## Revendications

1. Dispositif thermique (400) d'élévation de la pression d'un gaz comprenant :
- un réservoir (410) de gaz destiné à être alimenté en gaz sous une première pression,
- un moteur à combustion interne (420) comprenant au moins un circuit de fluide, tel qu'un circuit d'huile ou un circuit de liquide de refroidissement (422, 423), et un échappement des gaz de combustion,
- un générateur d'électricité (430) agencé entraîné en rotation par le moteur à combustion et configuré pour générer un courant électrique à partir du mouvement transmis,
- au moins un système de chauffage (440) du gaz se trouvant au moins en partie agencé dans le réservoir pour augmenter la température du gaz sous pression afin d'élever la pression dudit gaz sous-pression de la première pression vers une deuxième pression supérieure à la première pression ,
- une sortie de gaz (450) chauffé configurée pour délivrer le gaz chauffé à la deuxième pression,
dans lequel l'au moins système de chauffage (440) comprend :
- au moins un premier système échangeur de chaleur (441, 442) du type liquide-air pour transférer de l'énergie thermique du moteur à combustion interne (410) vers le gaz à partir de l'au moins un circuit de fluide (422, 423) du moteur à combustion interne (420),
- un deuxième système échangeur de chaleur (443) du type air-air pour transférer de l'énergie thermique de gaz de combustion de l'échappement des gaz de combustion vers le gaz,
- un système de chauffage électrique (445) alimenté par le courant électrique fourni par le générateur d'électricité (430) est configuré pour chauffer le gaz.

2. Dispositif thermique (400) selon la revendication 1, dans lequel le moteur à combustion interne (420) est configuré pour être alimenté en un combustible biosourcé, ce combustible biosourcé étant préférentiellement sélectionné dans le groupe comprenant l'éthanol dont notamment les bioéthanols, les huiles végétales, les biogaz dont notamment les biométhanes, et les combinaisons de ceux-ci.

3. Dispositif thermique (400) selon la revendication 1 ou 2, dans lequel l'au moins un circuit de fluide (422, 423) comprend un circuit de liquide de refroidissement (422) du moteur à combustion interne (420), le premier système échangeur de chaleur comprend au moins un premier échangeur de chaleur liquide-air (441) pour échanger des calories du liquide de refroidissement vers le gaz sous-pression.

4. Dispositif thermique selon l'une quelconque des revendications 1 à 3, dans lequel l'au moins un circuit de fluide (422, 423) comprend un circuit de lubrification (423) du moteur à combustion interne (420) distribuant un liquide de lubrification dans le moteur à combustion interne (420), le premier système échangeur de chaleur (441, 442) comprend au moins un deuxième échangeur de chaleur liquide-air (442) pour échanger des calories du liquide de lubrification vers le gaz sous-pression.

5. Dispositif thermique selon l'une quelconque des revendications 1 à 4 comprenant en outre une première valve antiretour (413A) et dans lequel le réservoir (410) est destiné à être alimenté en gaz sous-pression au travers de la première valve antiretour (413A).

6. Dispositif thermique selon l'une quelconque des revendication 1 à 5, comprenant en outre une deuxième valve antiretour (417),
dans lequel le réservoir (410) comprend :
- un premier sous-réservoir (411) par lequel il est destiné à être alimenter en gaz sous pression, et
- un deuxième sous-réservoir (412) agencé pour être alimenter en gaz par le premier sous-réservoir (411) au travers de la deuxième valve antiretour (417) et pour délivrer le gaz sous pression à la deuxième pression à la sortie de gaz,
l'au moins un système de chauffage du gaz (440) étant en outre configuré :
- pour augmenter la température du gaz sous pression dans le premier sous-réservoir (411) de la première pression vers une pression intermédiaire comprise entre la première pression et la deuxième pression,
- pour augmenter la température du gaz sous pression dans le deuxième sous-réservoir (412) de la pression intermédiaire vers la deuxième pression.

7. Dispositif thermique selon la revendication 6, dans lequel l'au moins un premier système échangeur de chaleur (422, 423) est agencé au moins en partie dans le premier sous-réservoir (411) pour augmenter la température du gaz sous pression dans le premier sous-réservoir (411) de la première pression vers une pression intermédiaire le deuxième système échangeur de chaleur (424) et le système de chauffage électrique (445) étant agencés dans le deuxième sous-réservoir (412) pour augmenter la température du gaz sous pression dans le deuxième sous-réservoir (412) de la pression intermédiaire vers la deuxième pression.

8. Installation de stockage mécanique d'énergie et de génération d'électricité (1) comprenant :
- au moins un volant d'inertie (10) apte à être entraîné en rotation par une source d'énergie extérieure (2) à l'installation,
- au moins une colonne de liquide (20, 20A, 20B),
- au moins un ensemble (30, 30A, 30B) comprenant un lest (31, 31A, 31B) et un contenant à gaz (32, 32A, 32B), tel un sac à gaz, ci-après ensemble lest/sac (30, 30A, 30B), disposé dans la colonne de liquide (20, 20A, 20B) et agencé de telle manière à ce que la chute du lest (31, 31A, 31B) dans la colonne de liquide entraine en rotation le volant d'inertie (10), le sac à gaz (32) étant configuré pour relâcher un gaz qui y est stocké lorsque l'ensemble lest/sac (30, 30A, 30B) atteint une portion supérieure de la colonne de liquide (20, 20A, 20B),
- au moins un système d'insufflation de gaz (40) au moins partiellement agencé dans la colonne de liquide (20, 20A, 20B) et qui est configuré pour insuffler du gaz dans le contenant à gaz (32, 32A, 32B) lorsque l'ensemble lest/sac (30, 30A, 30B) atteint une portion inférieure de la colonne de liquide (20, 20A, 20B),
- un deuxième générateur d'électricité (50) susceptible d'être entraîné en rotation par le volant d'inertie (10) pour générer de l'électricité,
dans lequel le système d'insufflation (40) comprend :
- une source de gaz pressurisé, tel qu'un turbo (41), configurée pour fournir un flux de gaz,
- un dispositif thermique (400) d'élévation de la pression d'un gaz configuré pour élever la température du flux de gaz fourni par la source de gaz pressurisé, le dispositif étant un dispositif selon l'une quelconque des revendications 1 à 7,
- au moins un mécanisme d'insufflation de gaz (43, 43A, 43B) configuré pour insuffler le flux de gaz chauffé dans le contenant à gaz (32, 32A, 32B) lorsque l'ensemble lest/sac (30, 30A, 30B) atteint une portion inférieure de la colonne de liquide (20, 20A, 20B).

9. Procédé d'élévation de la pression d'un gaz au moyen d'un moteur à combustion interne (420), le procédé d'élévation de pression d'un gaz comprenant les étapes suivantes :
- récupération d'un gaz à une première pression dans un réservoir (410),
- élévation de la température du gaz pour l'amener de la première pression à une deuxième pression par récupération de la chaleur générée par le fonctionnement du moteur à combustion interne au moyen de :
∘ un premier système échangeur de chaleur (441, 442) du type liquide-air pour transférer de l'énergie thermique du moteur à combustion interne (410) vers le gaz à partir d'au moins un circuit de fluide (422, 423) du moteur à combustion interne (420),
∘ un deuxième système échangeur de chaleur (443) du type air-air pour transférer de l'énergie thermique de gaz de combustion du moteur à combustion interne (420) vers le gaz,
∘ un système de chauffage électrique (445) alimenté par un courant électrique fourni par un générateur d'électricité (430) entraîné en rotation par le du moteur à combustion interne (420),
- délivrance du gaz à la deuxième pression.

10. Procédé d'élévation de la pression d'un gaz selon la revendication 9, dans lequel le moteur à combustion interne (420) est alimenté par un combustible biosourcé, ce combustible biosourcé étant préférentiellement sélectionné dans le groupe comprenant l'éthanol dont notamment les bioéthanols, les huiles végétales, les biogaz dont notamment les biométhanes, et les combinaisons de ceux-ci.

11. Procédé de génération d'électricité sur demande à partir d'au moins une source d'énergie intermittente mettant en oeuvre une Installation de stockage mécanique d'énergie et de génération d'électricité selon la revendication 8, le procédé comprenant les étapes suivantes :
- utilisation de la source d'énergie intermittente (2) en tant que source d'énergie extérieure pour entraîner au moins en partie en rotation le volant à inertie (10), le volant à inertie étant également entraînée par la chute de l'ensemble (30, 30A, 30B) comprenant un lest (31, 31A, 31B) et un contenant à gaz (32, 32A, 32B), tel qu'un sac à gaz, ledit gaz étant alimenté en gaz à la deuxième pression par le dispositif thermique (400),
- génération d'électricité à partir du deuxième générateur d'électricité (50) entraîné en rotation par le volant à inertie (10).
